(19) Europäisches Patentamt

European Patent Office

Office européen des brevets

(11) **EP 1 012 115 B1**

(12) **EUROPEAN PATENT SPECIFICATION**

(45) Date of publication and mention
of the grant of the patent:
**09.01.2002 Bulletin 2002/02**

(51) Int Cl.⁷: **C01C 3/12**, B01J 20/02,
B01J 20/28, G21F 9/12,
B01J 39/02

(21) Application number: **97939587.8**

(22) Date of filing: **27.08.1997**

(86) International application number:
**PCT/US97/15060**

(87) International publication number:
**WO 99/10278 (04.03.1999 Gazette 1999/09)**

(54) **ADSORBENT FOR METAL IONS AND METHOD OF MAKING AND USING**

ABSORBENT FÜR METALLIONEN UND VERFAHREN ZUR HERSTELLUNG UND VERWENDUNG

ADSORBANT POUR IONS METAL, TECHNIQUE DE PRODUCTION ET D'UTILISATION

(84) Designated Contracting States:
**DE FR GB**

(43) Date of publication of application:
**28.06.2000 Bulletin 2000/26**

(73) Proprietor: **MINNESOTA MINING AND
MANUFACTURING COMPANY
St. Paul, Minnesota 55133-3427 (US)**

(72) Inventors:
• **WHITE, Lloyd, R.
Saint Paul, MN 55133-3427 (US)**
• **LUNDQUIST, Susan, H.
Saint Paul, MN 55133-3427 (US)**

(74) Representative: **VOSSIUS & PARTNER
Siebertstrasse 4
81675 München (DE)**

(56) References cited:
**EP-A- 0 217 143          EP-A- 0 575 612
WO-A-97/32816**

**Description**

The invention was made with U.S. Government support under Subcontract 203690-A-F1, with Battelle Memorial Institute, Pacific Northwest Laboratories, based on a Contract DE-AC06-76RLO-1830 and Contract DE-AC06-76RLO-1830 awarded by the Department of Energy. The U.S. Government has certain rights in the invention.

The present invention pertains to monodisperse sorptive particles and a method therefor, and a method of using the particles in loose form, in a column, or enmeshed in a web or membrane for extraction of cesium ions from solution. The method and particles are useful in the remediation of nuclear wastes.

Hexacyanoferrates are known in the art as an adsorbent for cesium ions. See "A Review of Information on Ferrocyanate Solids for Removal of Cesium from Solutions," P. A. Haas, *Sep. Sci. Technol.* **28** (17-18), 2479-2508 (1993); and in "Evaluation of Selected Ion Exchangers for the Removal of Cesium and Strontium from MVST W-25 Supernate", J. L. Collins, et al., ORNL/TM-12938, April 1995

Granular potassium cobalt hexacyanoferrate (KCOHEX) has typically been prepared by a method described in U.S. Patent No. 3,296,123, wherein an aqueous acidic solution of potassium ferrocyanide is slowly mixed with an aqueous solution of cobalt nitrate, as shown in Formula 1.


potassium ferrocyanide + cobalt nitrate $\rightarrow$ KCOHEX + potassium nitrate                    I


Water is removed by centrifugation, the wet cake is washed with water, then dried in an oven to form a dried solid mass. The solid mass is ground and sized, and particles of from about 150 μm to about 450 μm are packed into columns for subsequent exposure to radioactive wastes containing, in particular, Cesium-137. Other hexacyanoferrates can be similarly prepared using appropriate starting materials.

The method of preparing particulate hexacyanoferrates suffers from two significant drawbacks. First, grinding the dried solids must be done carefully so as to minimize formation of unusable fines. Second, since a wide range of particle sizes results from grinding, the particulate must be sized through sieves. These operations are time-consuming and inevitably cause loss of product.

Spray-drying of solid materials is a method known in the art for preparation of useful solids. See, for example, Kirk-Othmer *Encyclopedia of Chemical Technology,* 4th Ed., John Wiley & Sons, New York, 1993; Vol. 8, p. 475 - 519, particularly pp. 505-508; and C. Strumillo and T. Kudra, "Drying: Principles, Applications and Design," Gordon and Breach, New York, 1986, pp. 352 - 359 It is believed that spray drying of hexacyanoferrates has not been described.

Briefly, the present invention provides a method comprising the step of. spray-drying a solution or slurry comprising one or more of members within the class (alkali metal or ammonium) (metal) hexacyanoferrate particles wherein the metal is selected from the group consisting of Fe, Ru, Os, Rh, Ir, Ni, Pd, Pt, Cu, Ag, Au, Zn, Cd, and Hg in a liquid to provide monodisperse, sorbent particles in a yield of at least 70 percent of theoretical yield and having an average particle size in the range of 1 to 500 μm, said sorbents being active towards Cs ions. Preferably the hexacyanoferrate particles are substantially spherical in shape and less than 20 percent by weight of particles have a size 5 μm or smaller. Combinations of hexacyanoferrates can be especially useful to remove Cs ions from aqueous solutions.

The sorbents preferably are selected from the group consisting of (potassium or ammonium) (metal) hexacyanoferrates wherein the metal preferably is selected from Zn, Cu, Ni, Cd, and Fe. More preferably, the sorbents are selected from the group consisting of potassium zinc hexacyanoferrate (KZNHEX), potassium copper hexacyanoferrate, potassium nickel hexacyanoferrate, potassium cadmium hexacyanoferrate, potassium iron hexacyanoferrate, ammonium iron hexacyanoferrate, and combinations thereof. The liquid in the solution or slurry can be aqueous or organic liquid.

In a further aspect, there are disclosed substantially spherical sorbent particles having an average particle size in the range of 1 to 500 μm, the particles being sorptive towards Cs ions in solution. The particles can be used in columns or beds to selectively remove Cs ions, which can be radioactive, from aqueous solutions.

In yet another aspect, the loose spray-dried sorbents which preferably are potassium zinc hexacyanoferrate or potassium nickel hexacyanoferrate, potassium copper hexacyanoferrate, potassium iron hexacyanoferrate, potassium cadmium hexacyanoferrate, ammonium iron hexacyanoferrate or ammonium iron iron hexacyanoferrate particles, can be introduced into a Cs ion containing solution, equilibrated with the solution, and then separated from the sorbed and/or exchanged metal ions.

In a still further aspect, the spherical sorptive particles that have been spray-dried can be enmeshed in non-woven, fibrous webs, matrices, or membranes. The webs, matrices, or membranes, which preferably are porous, can be used in solid phase extraction (SPE) procedures to selectively remove Cs ions from aqueous solutions.

In yet another aspect, the invention provides an SPE device, such as a cartridge which in preferred embodiments can be pleated or spirally wound, comprising a fibrous non-woven SPE web, preferably aramid fibers comprising monodisperse particles enmeshed therein which, in preferred embodiments, can be any of the hexacyanoferrate particulates enclosed in a cartridge device. Preferably, the web is porous.

In yet another embodiment, the invention provides a method of removing the specified metal ion from an aqueous solution comprising passing the aqueous solution by or through a fibrous non-woven SPE web or matrix or membrane comprising the above-described monodisperse particles which can be any of the sorptive particles made by the method of this invention, the particles preferably being potassium zinc hexacyanoferrate, potassium nickel hexacyano-ferrate, potassium iron hexacyanoferrate, potassium copper hexacyanoferrate, potassium cadmium hexacyanoferrate, and ammonium iron hexacyanoferrate particulate. Preferably, the web is porous.

In another embodiment, the invention provides a method of removing the specified metal ions from an aqueous solution comprising passing the aqueous solution through an SPE column comprising spherical, monodisperse sorptive particles made by the method of this invention, the particles preferably being any of potassium zinc hexacyanoferrate, potassium nickel hexacyanoferrate, potassium iron hexacyanoferrate, potassium copper hexacyanoferrate, potassium cadmium hexacyanoferrate, and ammonium iron hexacyanoferrate particulate.

In yet another aspect, the method further comprises the step of heating spherical (alkali metal or ammonium) (metal) hexacyanoferrate particles as defined above, after drying, at a temperature of at least 115°C, preferably 115 to 150°C, preferably for at least 5 hours, more preferably at least 10 hours.

In this application,

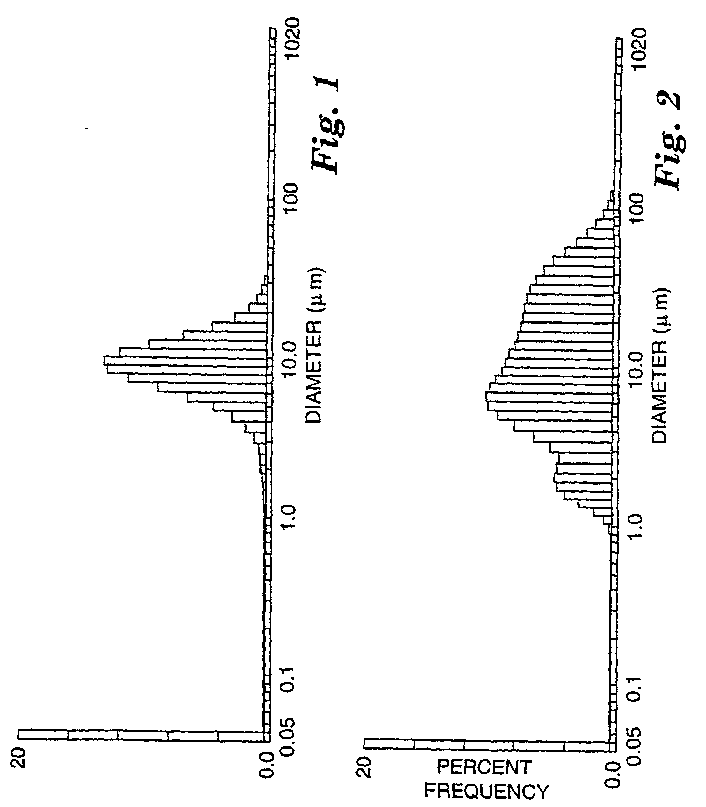

"size" means the diameter of a spherical particle or the largest dimension of an irregularly shaped particle;
"monodisperse" means a monomodal particle size distribution (i.e., particles of uniform size in a dispersed phase) having an average size in the range of 1 up to about 60 μm, preferably about 5 to about 30 μm, as illustrated by FIG. 1;
"drain time" means the time required to dewater a slurry of particles and fibers when making a sheet; and
"substantially spherical" means particles that are spherical, ovoid (having an elliptical cross-section), raspberry-like, or toroidal, and are free of sharp corners;
"particles" and "particulate" are used interchangeably;
"web", "matrix", and "membrane" are used interchangeably and each term includes the others;
"sorptive" or "sorb" means by one or both of absorption and adsorption; and
"heavy metal" refers to metals having a molecular weight of at least 50.

The overall process yield in making particles of the invention using a spray-dryer with a diameter of at least 1 meter is at least 70 percent, preferably 80-90 percent or more, compared to a yield of about 60 percent or less when using prior art ground and sieved particles. Preferably, the resulting particles are free of submicron size particles, with not more than 20 percent of particles being <5 μm in size. The spray-drying process substantially eliminates product particles having submicron sizes.

Additionally, free-flowing spherical particles will pack with point contact in columns, resulting in less channeling and a lower pressure drop during extraction compared with, for example, irregularly shaped prior art particles having the same average size. Irregularly shaped prior art particles, particularly those less than 5 μm in size can pack tightly and lead to a high pressure drop in extraction applications. When irregularly shaped prior art particles are greater than 50 μm in size, channeling can result as liquids pass through, resulting in poor separations.

Further, the advantages of the particles of the invention include reduced drain time by a factor of about 1.5 times or more compared to non-spherical, irregularly shaped, prior art particles typically obtained from a grinding process, when incorporated in a nonwoven sheet article.

Further, sheet articles can be made using particles of this invention, whereas in many cases sheet articles cannot be made from prior art ground and sieved particles because of excessive drain time or inability to control the sheet forming process. The sheet articles formed from spray-dried particles offer lower flow resistance than sheet articles made from ground and screened particles and are therefore more efficient to use.

FIG. 1 is a graph of the monodisperse particle-size distribution for spray-dried KNIHEX of Example 3.

FIG. 2 is a graph of the particle-size distribution for ground KNIHEX of Example 4 (comparative).

In preferred embodiments, sorptive particles useful in the present invention include substantially spherical sorptive particles of hexacyanoferrates, preferably potassium zinc hexacyanoferrate (KZNHEX), potassium nickel hexacyanoferrate (KNIHEX), potassium iron hexacyanoferrate (KFEHEX), potassium copperhexacyanoferrate (KCUHEX), potassium cadmium hexacyanoferrate (KCDHEX), and ammonium iron hexacyanoferrate (NH$_4$FEHEX). These particles are useful to sorb cesium (Cs), which may be in its radioactive forms.

It is desirable to have low solubility of the adsorbent in the analyte (metal ion) solution.

It is now recognized that potassium (metal or ammonium) hexacyanoferrate particles can be prepared by mixing at 0° to 5°C an aqueous solution of potassium ferrocyanide (available from Aldrich Chemical Co., and many other suppliers) with an aqueous solution of metal or ammonium nitrate, buffered to a pH of 5-6 using acetic acid as the buffering agent. The immediately formed precipitate of the desired hexacyanoferrate is collected, as for example, by filtration or centrifugation, and thoroughly washed with water. For example, when zinc nitrate solution is used, the resulting slurry will contain potassium zinc hexacyanoferrate (KZNHEX)

The wet precipitate of potassium (alkali metal or ammonium) (metal) hexacyanoferrate which comprises particles of irregular shapes can be slurried with liquid, preferably water, and then spray-dried preferably using a spinning disk atomizer and collecting the resulting substantially spherical hexacyanoferrate particles having an average size in the range of about 1 to 60 $\mu$m, preferably 5 to 30 $\mu$m, most preferably 5 to 15 $\mu$m, with most preferred average size of about 9 to 12 $\mu$m. The spherical particles are then heated but the particle size remains substantially unchanged

It is preferred that the particles in the slurry not be dried prior to subjecting to the spray drying technique.

Spray-drying of the slurry can be accomplished using well-known techniques which include the steps of:

1) atomization, using a spinning disk, of the material introduced into the dryer;
2) removing of moisture, as, for example, by contact of the material with hot gas; and
3) separation of dry product from the exhaust drying agent.

The slurry preferably has a solids content in the range of 3 to 15 percent by weight, more preferably 5 to 10 percent by weight, and most preferably 5 to 7.5 percent by weight, to ensure smooth operation of the apparatus

In some applications it may be desirable to limit the size of the (alkali metal or ammonium) (metal) hexacyanoferrate particles in the slurry that is to be spray-dried. For example, particles that are to be incorporated into non-woven fibrous webs, matrices, or membranes desirably are spray-dried from slurries wherein the particles are at most 20 $\mu$m, preferably at most 10 $\mu$m, and most preferably at most 1 $\mu$m in average size, to provide the monodisperse sorbent particles described above.

After spray-drying, the particles are free-flowing with most preferred average diameters in the range of 9-12 $\mu$m. The cyanoferrates preferably are heated at about 115°C for about 12 hours after drying to achieve maximum absorption capacity for cesium ions.

The particle can be evaluated for its ion exchange capacity (see Brown, G.N., Carson, K.J., desChane, J.R., Elovich, R.J., and P.K. Berry. September 1996. *Chemical and Radiation Stability of a Proprietary Cesium Ion Exchange Material Manufactured from WWL Membrane and Superlig™ 644*. PNNL-11328, Pacific Northwest National Laboratory, Richland, Washington.) by testing for the batch distribution coefficient or $K_d$ which is described as follows:

The batch distribution coefficient, $K_d$ is an equilibrium measure of the overall ability of the solid phase ion exchange material to remove an ion from solution under the particular experimental conditions that exist during the contact. The batch $K_d$ is an indicator of the selectivity, capacity, and affinity of an ion for the ion exchange material in the presence of a complex matrix of competing ions. In most batch $K_d$ tests, a known quantity of ion exchange material is placed in contact with a known volume of solution containing the particular ions of interest. The material is allowed to contact the solution for a sufficient time to achieve equilibrium at a constant temperature, after which the solid ion exchange material and liquid supernate are separated and analyzed. In this application, the batch $K_d$s were determined by contacting 0.01 g of the particle with 20 ml of PWTP (Process Waste Treatment Plant simulant solution) (see formulation below).

PWTP Waste Simulant Composition

| Species | Molarity (M) |
|---|---|
| $CaCO_3$ | 9.14 E$^{-4}$ |
| $Ca(NO_3)_2 . 4H_2O$ | 4.27 E$^{-5}$ |
| $CaCl_2$ | 1.60 E$^{-5}$ |
| $MgSO_4$ | 2.1 E$^{-4}$ |
| $MgCl_2 . 6H_2O$ | 1.18 E$^{-4}$ |
| Ferri-Floc | 0.04 ml/L |
| NaF | 4 21 E$^{-5}$ |
| $Na_3PO_4 . 12H_2O$ | 22 E$^{-5}$ |
| $Na_2SiO_3$ $9H_2O$ | 11 E$^{-4}$ |
| $NaHCO_3$ | 1.29 E$^{-3}$ |
| $K_2CO_3$ | 1.28 E$^{-5}$ |
| $CsNO_3$ | 3.4 E$^{-4}$ |

Ferri-Floc™ (Tennessee Chemical Co., Atlanta, GA) is a solution containing 10,000 ppm Iron and 25,800 ppm $SO_4$

The equation for determining the $K_d$ can be simplified by determining the concentration of the analyte before and after contact and calculating the quantity of analyte on the ion exchanger by difference:

$$K_d = \left( \frac{(C_1 - C_f)}{C_f} \right) \left( \frac{V}{M * F} \right)$$

Where: $C_1$ is the initial amount or activity of the ion of interest in the feed solution prior to contact,

$C_f$ is the amount or activity after contact,
V is the solution volume,
M is the exchanger mass,
F is the mass of dry ion exchanger divided by the mass of wet ion exchanger (F-factor).
$K_d$ (normal units are ml/g) represents the theoretical volume of solution (ml) that can be processed per mass of exchanger (dry weight basis) under equilibrium conditions. Lambda, the theoretical number of bed volumes of solution that can be processed per volume of exchanger, is obtained by multiplying $K_d$ by the exchanger bed density, $p_b$ (g of resin per ml of resin) as shown below:

$$\lambda = K_d * p_b$$

The lambda value provides a method for comparing the ion exchange performance of a wide variety of materials on a volume basis (e.g., in an ion exchange column).

More preferably, the experimental equipment that was required to complete the batch $K_d$ determinations included an analytical balance, a constant temperature water bath, an oven for F-factor determinations, a variable speed shaker table, 20-ml scintillation vials, 0.45 μm syringe filters, the appropriate ion exchanger, and simulant solutions. The particles were all dried thoroughly prior to testing. Approximately 0.01 g of each material was contacted with 20 ml of the stock PWTP solution. The sample bottles were placed into a 25°C constant temperature bath and shaken lightly for 20 hours. The samples were then filtered with a 0.45 μm syringe filter to separate the resin material from the solution and the resulting liquid was analyzed for cesium content by ICP-MS(Inductively coupled plasma -mass spectrometry).

The particles of the invention can be enmeshed in various porous, fibrous, nonwoven webs or matrices which preferably are porous Types of webs or matrices include fibrillated polytetrafluoroethylene (PTFE), microfibrous webs, macrofibrous webs, and polymer pulps.

**1. Fibrillated PTFE**

The PTFE composite sheet material of the invention is prepared by blending the particulate or combination of particulates employed with a PTFE emulsion until a uniform dispersion is obtained and adding a volume of process lubricant up to approximately one half the volume of the blended particulate. Blending takes place along with sufficient process lubricant to exceed sorptive capacity of the particles in order to generate the desired porosity level of the resultant article. Preferred process lubricant amounts are in the range of 3 to 200 percent by weight in excess of that required to saturate the particulate, as is disclosed in U.S. Patent No. 5,071,610, which is incorporated herein by reference. The aqueous PTFE dispersion is then blended with the particulate mixture to form a mass having a putty-like or dough-like consistency. The sorptive capacity of the solids of the mixture is noted to have been exceeded when small amounts of water can no longer be incorporated into the mass without separation. This condition should be maintained throughout the entire mixing operation. The putty-like mass is then subjected to intensive mixing at a temperature and for a time sufficient to cause initial fibrillation of the PTFE particles. Preferably, the temperature of intensive mixing is up to 90°C, more preferably it is in the range of 0° to 90°C, most preferably 20° to 60°C. Minimizing the mixing at the specified temperature is essential in obtaining extraction media and chromatographic transport properties.

Mixing times will typically vary from 0.2 to 2 minutes to obtain the necessary initial fibrillation of the PTFE particles. Initial mixing causes partial disoriented fibrillation of a substantial portion of the PTFE particles.

Initial fibrillation generally will be noted to be at an optimum within 60 seconds after the point when all components have been fully incorporated into a putty-like (dough-like) consistency. Mixing beyond this point will produce a composite sheet of inferior extraction medium and chromatographic properties.

Devices employed for obtaining the necessary intensive mixing are commercially available intensive mixing devices which are sometimes referred to as internal mixers, kneading mixers, double-blade batch mixers as well as intensive mixers and twin screw compounding mixers. The most popular mixer of this type is the sigma-blade or sigma-arm mixer. Some commercially available mixers of this type are those sold under the common designations Banbury mixer, Mogul mixer, C. W. Brabender Prep mixer and C. W. Brabender sigma blade mixer. Other suitable intensive mixing devices may also be used.

The soft putty-like mass is then transferred to a calendering device where the mass is calendered between gaps in calendering rolls preferably maintained at a temperature up to 125°C, preferably in the range of 0° to about 100°C, more preferably in the range of 20°C to 60°C, to cause additional fibrillation of the PTFE particles of the mass, and consolidation while maintaining the water level of the mass at least at a level of near the sorptive capacity of the solids, until sufficient fibrillation occurs to produce the desired extraction medium. Preferably the calendering rolls are made of a rigid material such as steel. A useful calendering device has a pair of rotatable opposed calendering rolls each of which may be heated and one of which may be adjusted toward the other to reduce the gap or nip between the two. Typically, the gap is adjusted to a setting of 10 mm for the initial pass of the mass and, as calendering operations progress, the gap is reduced until adequate consolidation occurs. At the end of the initial calendering operation, the resultant sheet is folded and then rotated 90° to obtain biaxial fibrillation of the PTFE particles. Smaller rotational angles (e.g., 20° to less than 90°) may be preferred in some extraction and chromatographic applications to reduce calender biasing, i.e., unidirectional fibrillation and orientation. Excessive calendering (generally more than two times) reduces the porosity which in turn reduces the solvent wicking in thin layer chromatography (TLC) and the flow-through rate in the filtration mode.

During calendering, the lubricant level of the mass is maintained at least at a level of exceeding the absorptive capacity of the solids by at least 3 percent by weight, until sufficient fibrillation occurs and to produce porosity or void volume of at least 30 percent and preferably 40 to 70 percent of total volume. The preferred amount of lubricant is determined by measuring the pore size of the article using a Coulter Porometer as described in the Examples below. Increased lubricant results in increased pore size and increased total pore volume as is disclosed in U.S. Patent No. 5,071,610,

The calendered sheet is then dried under conditions which promote rapid drying yet will not cause damage to the composite sheet or any constituent therein. Preferably drying is carried out at a temperature below 200°C. The preferred means of drying is by use of a forced air oven. The preferred drying temperature range is from 20°C to about 70°C. The most convenient drying method involves suspending the composite sheet at room temperature for at least 24 hours. The time for drying may vary depending upon the particular composition, some particulate materials having a tendency to retain water more than others.

The resultant composite sheet preferably has a tensile strength when measured by a suitable tensile testing device such as an Instron (Canton, MA) tensile testing device of at least 0.5 MPa. The resulting composite sheet has uniform porosity and a void volume of at least 30 percent of total volume.

The PTFE aqueous dispersion employed in producing the PTFE composite sheet of the invention is a milky-white aqueous suspension of minute PTFE particles. Typically, the PTFE aqueous dispersion will contain about 30 percent to about 70 percent by weight solids, the major portion of such solids being PTFE particles having a particle size in the range of about 0.05 to about 0.5 μm The commercially available PTFE aqueous dispersion may contain other ingredients, for example, surfactant materials and stabilizers which promote continued suspension of the PTFE particles.

Such PTFE aqueous dispersions are presently commercially available from Dupont de Nemours Chemical Corp., for example, under the trade names Teflon™ 30, Teflon™ 30B or Teflon™ 42. Teflon™ 30 and Teflon™ 30B contain about 59 percent to about 61 percent solids by weight which are for the most part 0.05 to 0.5 μm PTFE particles and from about 5.5 percent to about 6.5 percent by weight (based on weight of PTFE resin) of non-ionic wetting agent, typically octylphenol polyoxyethylene or nonylphenol polyoxyethylene. Teflon™ 42 contains about 32 to 35 percent by weight solids and no wetting agent but has a surface layer of organic solvent to prevent evaporation. A preferred source of PTFE is FLUON™, available from ICI Americas, Inc. Wilmington, DE. It is generally desirable to remove, by organic solvent extraction, any residual surfactant or wetting agent after formation of the article.

In other embodiments of the present invention, the fibrous membrane (web) can comprise non-woven, macro- or microfibers preferably selected from the group of fibers consisting of polyamide, polyolefin, polyester, polyurethane, glass fiber, polyvinylhalide, or a combination thereof. The fibers preferably are polymeric. (If a combination of polymers is used, a bicomponent fiber may be obtained.) If polyvinylhalide is used, it preferably comprises fluorine of at most 75 percent (by weight) and more preferably of at most 65 percent (by weight). Addition of a surfactant to such webs may be desirable to increase the wettability of the component fibers.

### 2. Macrofibers

The web can comprise thermoplastic, melt-extruded, large-diameter fibers which have been mechanically-calendered, air-laid, or spunbonded. These fibers have average diameters in the general range of 50 µm to 1,000 µm.

Such non-woven webs with large-diameter fibers can be prepared by a spunbond process which is well known in the art. (See, e.g., U S. Patent Nos. 3,338,992, 3,509,009, and 3,528,129, the fiber preparation processes of which are incorporated herein by reference ) As described in these references, a post-fiber spinning web-consolidation step (i.e., calendering) is required to produce a self-supporting web. Spunbonded webs are commercially available from, for example, AMOCO, Inc. (Naperville, IL).

Non-woven webs made from large-diameter staple fibers can also be formed on carding or air-laid machines (such as a Rando-Webber™ Model 12BS made by Curlator Corp., East Rochester, NY), as is well known in the art. See, e.g., U.S. Patent Nos. 4,437,271, 4,893,439, 5,030,496, and 5,082,720, the processes of which are incorporated herein by reference.

A binder is normally used to produce self-supporting webs prepared by the air-laying and carding processes and is optional where the spunbond process is used. Such binders can take the form of resin systems which are applied after web formation or of binder fibers which are incorporated into the web during the air laying process.

Examples of common binder fibers include adhesive-only type fibers such as Kodel™ 43UD (Eastman Chemical Products, Kingsport, TN) and bicomponent fibers, which are available in either side-by-side form (e.g., Chisso ES Fibers, Chisso Corp., Osaka, Japan) or sheath-core form (e.g., Melty™ Fiber Type 4080, Unitika Ltd., Osaka, Japan). Application of heat and/or radiation to the web "cures" either type of binder system and consolidates the web.

Generally speaking, non-woven webs comprising macrofibers have relatively large voids. Therefore, such webs have low capture efficiency of small-diameter particulate (reactive supports) which is introduced into the web. Nevertheless, particulate can be incorporated into the non-woven webs by at least four means First, where relatively large particulate is to be used, it can be added directly to the web, which is then calendered to actually enmesh the particulate in the web (much like the PTFE webs described previously). Second, particulate can be incorporated into the primary binder system (discussed above) which is applied to the non-woven web. Curing of this binder adhesiveiy attaches the particulate to the web Third, a secondary binder system can be introduced into the web. Once the particulate is added to the web, the secondary binder is cured (independent of the primary system) to adhesively incorporate the particulate into the web. Fourth, where a binder fiber has been introduced into the web during the air laying or carding process, such a fiber can be heated above its softening temperature. This adhesively captures particulate which is introduced into the web. Of these methods involving non-PTFE macrofibers, those using a binder system are generally the most effective in capturing particulate. Adhesive levels which will promote point contact adhesion are preferred.

Once the particulate (reactive supports) has been added, the loaded webs are typically further consolidated by, for example, a calendering process. This further enmeshes the particulate within the web structure.

Webs comprising larger diameter fibers (i.e., fibers which average diameters between 50 µm and 1,000 µm) have relatively high flow rates because they have a relatively large mean void size.

### 3. Microfibers

When the fibrous web comprises non-woven microfibers, those microfibers provide thermoplastic, melt-blown polymeric materials having active particulate dispersed therein. Preferred polymeric materials include such polyolefins as polypropylene and polyethylene, preferably further comprising a surfactant, as described in, for example, U.S. Patent No, 4,933,229, the process of which is incorporated herein by reference. Alternatively, surfactant can be applied to a blown microfibrous (BMF) web subsequent to web formation. Polyamide can also be used. Particulate can be incorporated into BMF webs as described in U.S Patent No. 3,971,373, the process of which is incorporated herein by reference.

Microfibrous webs of the present invention have average fiber diameters up to 50 µm, preferably from 2 µm to 25 µm, and most preferably from 3 µm to 10 µm. Because the void sizes in such webs range from 0.1 µm to 10 µm, preferably from 0.5 µm to 5 µm, flow through these webs is not as great as is flow through the macrofibrous webs described above.

### 4. Cast Porous Membranes

Solution-cast porous membranes can be provided by methods known in the art. Such polymeric porous membranes can be, for example, polyolefin including polypropylene, polyamide, polyester, polyvinyl chloride, and polyvinyl acetate fibers.

## 5. Fibrous Pulps

The present invention also provides a solid phase extraction sheet comprising a porous fibrous pulp, preferably a polymeric pulp, comprising a plurality of fibers that mechanically entrap active particles, and preferably a polymeric hydrocarbon binder, the weight ratio of particles to binder being at least 13:1 and the ratio of average uncalendered sheet thickness to effective average particle diameter being at least 125:1.

Generally, the fibers that make up the porous polymeric pulp of the SPE sheet of the present invention can be any pulpable fiber (i.e., any fiber that can be made into a porous pulp). Preferred fibers are those that are stable to radiation and/or to a variety of pHs, especially very high pHs (e.g., pH = 14) and very low pHs (e.g., pH = 1). Examples include polyamide fibers and those polyolefin fibers that can be formed into a pulp including, but not limited to, polyethylene and polypropylene. Particularly preferred fibers are aromatic polyamide fibers and aramid fibers because of their stability to both radiation and highly caustic fluids. Examples of useful aromatic polyamide fibers are those fibers of the nylon family. Polyacrylic nitrile, cellulose, and glass can also be used. Combinations of pulps can be used.

Examples of useful aramid fibers are those fibers sold under the trade name Kevlar™ (DuPont, Wilmington, DE). Kevlar™ fiber pulps are commercially available in three grades based on the length of the fibers that make up the pulp. Regardless of the type of fiber(s) chosen to make up the pulp, the relative amount of fiber in the resulting SPE sheet (when dried) ranges from about 12.5 percent to about 30 percent (by weight), preferably from about 15 percent to 25 percent (by weight).

Useful binders in the SPE sheet of the present invention are those materials that are stable over a range of pHs (especially high pHs) and that exhibit little or no interaction (i.e., chemical reaction) with either the fibers of the pulp or the particles entrapped therein. Polymeric hydrocarbon materials, originally in the form of latexes, have been found to be especially useful Common examples of useful binders include, but are not limited to, natural rubbers, neoprene, styrene-butadiene copolymer, acrylate resins, and polyvinyl acetate. Preferred binders include neoprene and styrene-butadiene copolymers. Regardless of the type of binder used, the relative amount of binder in the resulting SPE sheet (when dried) is about 3 percent to about 7 percent, preferably about 5 percent. The preferred amount has been found to provide sheets with nearly the same physical integrity as sheets that include about 7 percent binder while allowing for as great a particle loading as possible. It may be desirable to add a surfactant to the fibrous pulp, preferably in small amounts up to about 0.25 weight percent of the composite.

Because the capacity and efficiency of the SPE sheet depends on the amount of particles included therein, high particle loading is desirable The relative amount of particles in a given SPE sheet of the present invention is preferably at least about 65 percent (by weight), more preferably at least about 70 percent (by weight), and most preferably at least about 75 percent (by weight). Additionally, the weight percentage of particles in the resulting SPE sheet is at least 13 times greater than the weight percentage of binder when present, preferably at least 14 times greater than the weight percentage of binder, more preferably at least 15 times greater than the weight percentage of binder.

Regardless of the type or amount of the particles used in the SPE sheet of the present invention, they are mechanically entrapped or entangled in the fibers of the porous pulp. In other words, the particles are not covalently bonded to the fibers.

Objects and advantages of this invention are further illustrated by the following examples. The particular materials and amounts thereof, as well as other conditions and details, recited in these examples should not be used to unduly limit this invention.

## EXAMPLES

### Example 1

Potassium zinc hexacyanoferrate (KZNHEX) was prepared by slowly adding an aqueous solution of 1 part 0.5 M potassium ferrocyanide (0.28 moles) (pH was adjusted to pH 5.0-5.1 using concentrated acetic acid) cooled to between 0°C and 4°C at to an aqueous solution of 2.0 parts 0.3 M zinc nitrate (0.34 moles) cooled to between 0°C and 4°C with constant stirring. Precipitate was separated from the reaction mixture using a centrifuge (Centrifuge Model 460G, International Equipment Company, Boston, MA) by separating the initial precipitate, then repeatedly slurrying the precipitate in water and re-centrifuging, for a total of four washings.

The clean precipitate was again slurried in water at a concentration of 7.5 percent by weight, then spray-dried using a Niro Atomizer, Model 68, Order No. #093-1413-00-2 Serial #2402 spray dryer (Niro Atomizer, Inc., Columbia, MD), as follows:

Inlet air temperature: 190°C
Spinning Disc RPM's: 400 KPa (58 psig)

Slurry feed rate: 2.4 l/hr
Outlet temperature: 85°C
Cyclone magnahelic pressure: 0.47 in $H_2O$ (1.19 x $10^{-3}$ kg/cm$^2$).

Recovered dried potassium zinc hexacyanoferrate was observed under an SEM (Cambridge model S240, LEO Electromicroscopy, Inc. Thornwood, NY) to be spherical in shape. Measurement of the particles using a Horiba Model LA-900 Particle Size Analyzer (Horiba Instruments, Inc., Irvine, CA), showed an average particle size (average diameter) of approximately 11.8 μm with about 20 weight percent less than 5 μm in size.
The raspberry-shaped particles were heated in an air-vented oven at approximately 115°C for 18 hours. Recovery from heating was essentially quantitative, and no loss of size or shape was noted as a result of the heating procedure.

## Example 2 (Comparative)

Potassium zinc hexacyanoferrate was prepared as described in Example 1, except that the solid precipitate obtained from the final centrifuge wash was spread out in a thin layer about 2.5 cm thick on a drying tray and heated in air at 115°C for 18 hours until the solid had dried. The dried solid was broken up from its clumps using a mortar and pestle. The average particle size of the material was 0.636 micrometers so no further grinding was done. The particles were observed under an SEM (Cambridge Model S240), and were observed to be typically irregular in shape (significant deviation from spherical). All particles were less than 1 μm in size.

## Example 3

Potassium nickel hexacyanoferrate (KNIHEX) was prepared by slowly adding an aqueous solution of I part 0.3 M potassium ferrocyanide (0.86 moles) (pH was adjusted to pH 5.0-5.1 using concentrated acetic acid) cooled to between 0°C and 4°C at to an aqueous solution of 1.44 parts 0.3 M nickel nitrate (1 23 moles) cooled to between 0°C and 4°C with constant stirring. Precipitate was separated from the reaction mixture using a centrifuge (Centrifuge Model 460G, International Equipment Company, Boston, MA) by separating the initial precipitate, then repeatedly slurrying the precipitate in water and re-cenorifuging, for a total of four washings.
The clean precipitate was again slurried in water at a concentration of 7.5 percent by weight, then spray-dried using a Niro Atomizer Serial #2402 spray dryer (Niro Atomizer, Inc., Columbia, MD), as follows

Inlet air temperature: 192°C
Spinning Disc RPM's: 400 KPa (58 psig)
Slurry feed rate: 2.4 l/hr
Outlet temperature: 79.3°C
Cyclone magnahelic pressure: 0.47 in $H_2O$ (1.19 x $10^{-3}$ kg/cm$^2$)

Recovered dried potassium nickel hexacyanoferrate was observed under an SEM (Cambridge model S240) to be spherical in shape. Measurement of the particles using a Horiba Model LA-900 Particle Size Analyzer (Horiba Instruments, Inc., Irvine, CA), showed an average particle size (average diameter) of approximately 9.5 μm with about 10 weight percent of the particle less than 5 μm.
The spherical particles were heated in an air-vented oven at approximately 115°C for 18 hours. Recovery from heating was essentially quantitative, and no loss of size or shape was noted as a result of the heating procedure.
Fig. 1 shows that the particle size distribution of the KNIHEX particles was monodisperse.

## Example 4 (Comparative)

Potassium nickel hexacyanoferrate was prepared as described in Example 3, except that the solid precipitate obtained from the final centrifuge wash was spread out in a thin layer about 2.5 cm thick on a drying tray and heated in air at 115°C for 18 hours until the solid had dried. The dried solid was broken up from its clumps using a mortar and pestle. The material was then ground with a ball mill using Zirconia media for 90 minutes. The average particle size was 16.8 μm with about 30% of the material less than 5 μm in size. The particles were observed under an SEM (Cambridge Model S240) and were typically irregular in shape (significant deviation from spherical).
Fig. 2 shows the particles size distribution of the ground KNIHEX particles was large compared to that of Example 3 (Fig. 1) where the particle size distribution was narrow.

**Example 5**

Ammonium ferric hexacyanoferrate ($NF_4Fe^{III}[Fe^{II}(CN)_6]$) was prepared by slowly adding an aqueous solution of 1 part 0.3 M ammonium ferrocyanide (0.86 moles) (pH was adjusted to pH 5.0-5.1 using concentrated acetic acid) cooled to between 0°C and 4°C at to an aqueous solution of 1 parts 0.5 M ferric nitrate (0 86 moles) cooled to between 0°C and 4°C with constant stirring. Precipitate was separated from the reaction mixture using a centrifuge (Centrifuge Model 460G, International Equipment Company, Boston, MA) by separating the initial precipitate, then repeatedly slurrying the precipitate in water and re-centrifuging, for a total of four washings.

The clean precipitate was again slurried in water at a concentration of 7.5 percent by weight, then spray-dried using a Niro Serial #2402 spray dryer (Niro Atomizer, inc., Columbia, MD), as follows:

Inlet air temperature: 190°C
Spinning Disc RPM's: 400 KPa (58 psig)
Slurry feed rate: 2.4 L/hr
Outlet temperature: 67.6°C
Cyclone magnahelic pressure: 0.47 in $H_2O$ (1.19 x $10^{-3}$ kg/cm$^2$).

Recovered dried ammonium ferric hexacyanoferrate was observed under an SEM (Cambridge model S240) to be spherical in shape. Measurement of the particles using a Horiba Model LA-900 Particle Size Analyzer (Horiba Instruments, Inc., Irvine, CA), showed an average particle size of approximately 16.11 μm with less than about 10 weight percent of the particles less than 5 μm.

The spherical particles were heated in an air-vented oven at approximately 115°C for 18 hours. Recovery from heating was essentially quantitative, and no loss of size or shape was noted as a result of the heating procedure.

**Example 6 (Comparative)**

Ammonium ferric hexacyanoferrate was prepared as described in Example 5, except that the solid precipitate obtained from the final centrifuge wash was spread out in a thin layer about 2.5 cm thick on a drying tray and heated in air at 115°C for 18 hours until the solid had dried. The dried solid was broken up from its clumps using a mortar and pestle The material was then ground with a ball mill using Zirconia media for 40 minutes. The average particle size was 5.00 μm with about 98% of the material less than 5 μm in size. The particles were typically irregular in shape (significant deviation from spherical)

**Example 7**

Potassium nickel hexacyanoferrate (KNIHEX) was prepared by slowly adding an aqueous solution of 1 part 0.3 M potassium ferrocyanide (0.29 moles) (pH was adjusted to 5.0-5.1 using concentrated acetic acid) cooled to between 0°C and 4°C at to an aqueous solution of 1.44 parts 0.3 M nickel nitrate (0.42 moles) cooled to between 0°C and 4°C with constant stirring. Precipitate was separated from the reaction mixture using a centrifuge (Centrifuge Model 460G, International Equipment Company, Boston, MA) by separating the initial precipitate, then repeatedly slurrying the precipitate in water and re-centrifuging, for a total of four washings.

The clean precipitate was again slurried in water at a concentration of 7.5 percent by weight, then spray-dried using a Niro Atomizer Serial #2402 spray dryer (Niro Atomizer, Inc., Columbia, MD), as follows:

Inlet air temperature: 192°C
Spinning Disc RPM's: 400 KPa (58 psig)
Slurry feed rate: 2.4 l/hr
Outlet temperature: 793°C
Cyclone magnahelic pressure: 0.47 in $H_2O$ (1.19 x $10^{-3}$ kg/cm$^2$).

Recovered dried potassium nickel hexacyanoferrate was observed under an SEM (Cambridge model S240) to be spherical in shape. Measurement of the particles using a Horiba Model LA-900 Particle Size Analyzer (Horiba Instruments, Inc., Irvine, CA), showed an average particle size of approximately 12 μm with less than about 10% of the particle less than 5 μm.

The spherical particles were heated in an air-vented oven at approximately 115°C for 18 hours. The yield was 78% by weight of the reacted prepared material No change in size or shape was noted as a result of the heating procedure.

### Example 8 (Comparative)

Potassium nickel hexacyanoferrate was prepared as described in Example 7, except that the solid precipitate obtained from the final centrifuge wash was spread out in a thin layer about 2.5 cm thick on a drying tray and heated in air at 115°C for 18 hours until the solid had dried. The dried solid was broken up from its clumps using a mortar and pestle. The material was then ground in a freezer mill (SPEX model 6700 SPEX Industries Inc., Edison, NJ) for 6 minutes. The material was sieved with a 200 mesh screen (74 μm) to remove large particles, and then hydrocycloned to remove fines below 5 μm. The average particle size was 21 μm μm with about 27 weight percent of the material less than 5 μm. The particles were typically irregular in shape (significant deviation from spherical). The total yield of the desired particles after grinding, sieving and hydrocycloning was 3.7%.

### Example 9

Ammonium ferric hexacyanoferrate was prepared by slowly adding an aqueous solution of 1 part 0.3 M ammonium ferrocyanide (0 35 moles) (pH was adjusted to pH 5.0-5.1 using concentrated acetic acid) cooled to between 0°C and 4°C at to an aqueous solution of 2 parts 0.5 M ferric nitrate (0.50 moles) cooled to between 0°C and 4°C with constant stirring. Precipitate was separated from the reaction mixture using a centrifuge (Centrifuge Model 460G, International Equipment Company, Boston, MA) by separating the initial precipitate, then repeatedly slurrying the precipitate in water and re-centrifuging, for a total of four washings.

The clean precipitate was again slurried in water at a concentration of 7.5 percent by weight, then spray-dried using a Niro Atomizer Serial #2402 spray dryer (Niro Atomizer, Inc., Columbia, MD), as follows:

> Inlet air temperature: 192°C
> Spinning Disc RPM's: 400 KPa (58 psig)
> Slurry feed rate: 2.4 l/hr
> Outlet temperature: 79.3°C
> Cyclone magnahelic pressure: 0.47 in $H_2O$ (1.19 x $10^{-3}$ kg/cm$^2$)

Recovered dried ammonium ferric hexacyanoferrate represented 75 percent yield, and was observed under an SEM (Cambridge model S240) to be spherical in shape. Measurement of the particles using a Horiba Model LA-900 Particle Size Analyzer (Horiba Instruments, Inc., Irvine, CA), showed an average particle size of approximately 14.0 μm with less than about 10% of the particle less than 5 μm.

The spherical particles were heated in an air-vented oven at approximately 115°C for 18 hours. No change of size or shape was noted as a result of the heating procedure.

### Example 10 (Comparative)

Ammonium ferric hexacyanoferrate was prepared as described in Example 9, except that the solid precipitate obtained from the final centrifuge wash was spread out in a thin layer about 2.5 cm thick on a drying tray and heated in air at 115°C for 18 hours until the solid had dried. The dried solid was broken up from its clumps using a mortar and pestle. The average particle size was 1.15 μm with 98.5 percent by weight of the material less than 5 μm in size. The particles were typically irregular in shape (significant deviation from spherical) and were too small to process further. The yield was 1.5%.

### Example 11

A particle-filled porous web was prepared from the spherical potassium zinc hexacyanoferrate particles of Example 1. Into a 4 l Waring™ blender was added 2000 g water with 0.25 g Tamol 850™ dispersant (Rohm & Haas Co., Philadelphia, PA) and then 9.6 g Kevlar™ 1F306 dry aramid fiber pulp (DuPont, Wilmington, DE) was added and blended at low speed for 30 seconds. To this slurry was then added 36 g of the particle from Example 3 with blending on low speed, followed by 6.15 g (2.4 g dry weight) Goodrite™ 1800X73 styrene-butadiene latex binder aqueous slurry (B. F. Goodrich Co., Brecksville, OH). Blending was continued for 30 seconds at a low speed. To this mixture was added 20 g of a 25% solution of Alum (aluminum sulfate in water), and stirring was continued for an additional minute. After which I gram of a 1% solution of Nalco 7530 (Nalco Chemical Company, Chicago, IL) was added and the solution mixed 3 seconds on low The mixture was poured into a Williams sheet mold (Williams Apparatus Co., Watertown, NY) equipped with a 413.3 cm$^2$ porous screen having pore size of (80 mesh, approximately 177μm) at the bottom to allow water to drain, drain time was 120 seconds. The resulting wet sheet was pressed in a pneumatic press (Mead Fluid Dynamics, Chicago, IL) at approximately 551 KPa for approximately five minutes to remove additional water. Finally, the porous web was dried on a handsheet dryer for 120 minutes at 150°C.

**Example 12 (Comparative)**

Example 11 was repeated using ground and sized particulate as obtained in Example 2 in place of spray-dried particles. Drain time was 240 seconds. This showed that prior art particles loaded in a web required 2 times the drain time compared to spray-dried particles of the invention loaded in a web.

**Example 13**

A particle-filled porous web was prepared from the spherical potassium nickel hexacyanoferrate particles of Example 3. Into a 4 l Waring™ blender was added 2000 g water with 0.25 g Tamol 850™ dispersant (Rohm & Haas Co., Philadelphia, PA) and then 14.35 g Kevlar™ 1F306 (12g, 83.5% solids) aramid fiber pulp (DuPont, Wilmington, DE) was added and blended at low speed for 30 seconds. To this slurry was then added 45 g of the particle from Example 3 with blending on low speed, followed by 7.69 g (3.0 g dry weight) Goodrite™ 1800 X 73 styrene-butadiene latex binder aqueous slurry (B. F Goodrich Co., Brecksville, OH). Blending was continued for 30 seconds at a low speed. To this mixture was added 20 g of a 25% solution of Alum (aluminum sulfate in water), and stirring was continued for an additional minute After which 1 gram of a 1% solution of Nalco 7530 (Nalco Chemical Company, Chicago, IL) was added and the solution mixed 3 seconds on low. The mixture was poured into a Williams sheet mold (Williams Apparatus Co., Watertown, NY) equipped with a 413 cm$^2$ porous screen having a pore size of 80 mesh (approximately 177 μm) at the bottom to allow water to drain; drain time was 30 seconds. The resulting wet sheet was pressed in a pneumatic press (Mead Fluid Dynamics, Chicago, IL) at approximately 551 KPa for approximately five minutes to remove additional water. Finally, the porous web was dried on a handsheet dryer for 120 minutes at 150°C.

**Example 14 (Comparative)**

Example 13 was repeated using ground particles obtained in Example 4 in place of spray-dried particles. Drain time was 45 seconds. This showed that prior art particles loaded in a web required more than 1.5 times the drain time compared to spray-dried particles of the invention loaded in a web.

**Example 15**

A particle-filled porous web was prepared from the spherical ammonium ferric hexacyanoferrate particles of Example 5. Into a 4 l Waring™ blender was added 2000 g water with 0.25 g Tamol 850™ dispersant (Rohm & Haas Co., Philadelphia, PA) and then 129 g Kevlar™ 1F306 (10.8g, 83 5% solids) aramid fiber pulp (DuPont, Wilmington, DE) was added and blended at low speed for 30 seconds. To this slurry was then added 40.5 g of the particle from Example 5 with blending on low speed, followed by 6.9 g (2.7 g dry weight) Goodrite™ 1800 X 73 styrene-butadiene latex binder aqueous slurry (B F. Goodrich Co., Brecksville, OH). Blending was continued for 30 seconds at a low speed. To this mixture was added 20 g of a 25% solution of Alum (aluminum sulfate in water), and stirring was continued for an additional minute. After which 1 gram of a 1% solution of Nalco 7530 (Nalco Chemical Company, Chicago, IL) was added and the solution mixed 3 seconds on low. The mixture was poured into a Williams sheet mold (Williams Apparatus Co., Watertown, NY) equipped with a 413 cm$^2$ porous screen with a pore size of 80 mesh (approximately 177 μm) at the bottom to allow water to drain; drain time was 15 seconds. The resulting wet sheet was pressed in a pneumatic press (Mead Fluid Dynamics, Chicago, IL) at approximately 551 KPa for approximately five minutes to remove additional water. Finally, the porous web was dried on a handsheet dryer for 120 minutes at 150°C.

**Example 16 (Comparative)**

Example 15 was repeated using ground and sized particulate as obtained in Example 6 in place of spray-dried particles. Drain time was 120 seconds. This showed that prior art particles loaded in a web required 8 times the drain time compared to spray-dried particles of the invention loaded in a web.

**Example 17**

A 25 mm diameter disk having a thickness of 1.98 mm was die cut from the particle-filled porous web of Example 15, spray dried $NH_4Fe^{III}(Fe^{II}(CN)_6)$. The disk weight was 0.69g with 72.7 % particle, weight of particle in membrane at 22 mm (flow area) was 0.39g. The disk was placed in a stainless steel disk holder (Cole Parmer Instrument Co., Niles, IL) fitted with inlet and outlet pipes, so that the effective disk diameter was 22 mm. The disk was washed

**12**

with water, then an aqueous solution containing 50 mg/l cesium ion was pumped through the disk at a flow rate of 5 ml/min., which corresponds to 6.6 Bed Volumes/min, wherein bed volume means the volume of the disk. Cesium removal, reported as $C/C_O$, where C represents the cesium concentration in the effluent and $C_O$ represents initial cesium concentration, as a function of bed volumes is shown in Table 1.

Table 1

| Bed Volumes | $C/C_O$ | $\Delta P$ (kPa) |
|---|---|---|
| 0 | 0 | 21 |
| 32 | 0.016 | 21 |
| 66 | 0.188 | 21 |
| 99 | 0.447 | 21 |
| 132 | 0.498 | 21 |
| 232 | 0.597 | 21 |
| 298 | 0.662 | 21 |
| 365 | 0.731 | 21 |
| 464 | 0.707 | 21 |
| 597 | 0.738 | 21 |
| 730 | 0.826 | 21 |
| 1129 | 0.866 | 27 |

The data of Table 1 show that spherical $NH_4FEHEX$ particles in a porous web are very effective in removing cesium ions from aqueous solution. The back pressure build up was constant (i.e., about 21 kPa) during about 3/4 of the run, and increased slightly to about 27 kPa at the end of the run.

## Example 18 (Comparative)

A 25 mm diameter disk having a thickness of 2.16 mm was die cut from the particle-filled porous web of Example 17, ground $NH_4Fe^{III}(Fe^{II}(CN)_6)$. The disk weight was 0.76g and contained 72% by weight particles, therefore at 22mm (flow area) the particle weight was 0.34g. The disk was placed in a stainless steel disk holder (Cole Parmer Instrument Co., Niles, IL) fitted with inlet and outlet pipes, so that the effective disk diameter was 22 mm. The disk was washed with water, then an aqueous solution containing 50 mg/l cesium ion was pumped through the disk.

Cesium removal, reported as $C/C_O$, where C represents the cesium concentration in the effluent and $C_O$ represents initial cesium concentration, as a function of bed volumes is shown in Table 2. The pressure drop across the membrane was increased to 151 KPa during the evaluation.

Table 2

| Bed Volumes | $C/C_O$ | $\Delta P$ (kPa) |
|---|---|---|
| 47 | 0.34 | 41 |
| 94 | 0.54 | 41 |
| 141 | 0.50 | 48 |
| 188 | 0.45 | 55 |
| 235 | 0.43 | 55 |
| 376 | 0.37 | 66 |
| 471 | 0.34 | 69 |
| 565 | 0.37 | 76 |
| 753 | 0 40 | 90 |
| 942 | 0.45 | 97 |

Table 2 (continued)

| Bed Volumes | C/C$_o$ | ΔP (kPa) |
|---|---|---|
| 1130 | 0.52 | 110 |

The data of Table 2 show that irregular NH$_4$FEHEX particles in a porous web are very effective in removing cesium ions from aqueous solution. The back pressure build up during the evaluation was 151 kPa which was more than 5 times greater than the back pressure for spray-dried material in Example 17.

## Example 19

Comparative capacity data derived from K$_d$ determination is presented in Table 3, below both for spray-dried and ground material.

Table 3 Capacity data as determined by Kd's:

Table 3

| Particle | Example Number | Processing Method | Capacity (g Cs/g particle) |
|---|---|---|---|
| K$_2$ZnFe(CN)$_6$ | 4 | Raw product | 0.1125 |
| K$_2$ZnFe(CN)$_6$ | 3 | Spray dried | 0.115 |
| KNiFe(CN)$_6$ | 6 | Ground | 0.0997 |
| KNiFe(CN)$_6$ | 5 | Spray dried | 0.1093 |

The data of Table 4 show that the capacities for spray-dried materials of the invention were improved compared to raw product of ground particles.

## Example 20 Mixed Metal Hexacyanoferrate Adsorbents

Table 4, below, gives compositions and capacities for cesium for a number of adsorbents with composition of: potassium metal hexacyanoferrate where metal may be cobalt, copper, nickel, zinc or mixtures of those metals.

Table 4

| Particle | Metal to metal ratio | Capacity mMol/gram |
|---|---|---|
| KCOCUHEX | Co/Cu=1 | 0.84 |
| KCOCUHEX | Co/Cu=1/3 | 0.84 |
| KCOCUHEX | Co/Cu=3 | 0.79 |
| KCONIHEX | Co/Ni=1 | 0.81 |
| KCONIHEX | Co/Ni=1/3 | 0.78 |
| KCOHEX | KCOHEX | 0.85 |
| KCOZNHEX | Co/Zn=1 | 0.79 |
| KCOZNHEX | Co/Zn=1/3 | 0.81 |
| KCOZNHEX | Co/Zn=3 | - 0 83 |
| KCOZNHEX | Cu/Zn=1 | 0.79 |
| KZNHEX | KZNHEX | 0.85 |
| KCUHEX | KCUHEX | 0.76 |
| KCOCUHEX | Co/Cu=1/2 | 0.77 |
| .KCOCUHEX | Co/Cu=2 | 0.81 |
| KCOZNHEX | Co/Zn=1/2 | 0.41 |

All of these adsorbents were prepared essentially following the procedure given in Example I using appropriate starting materials In all cases an excess of metal (as compared with potassium) existed and amounts of the solutions of each metal were adjusted to yield the ratios shown in the second column.

All of these compositions show good or high capacity for cesium and all have low solubility.

Various modifications and alterations that do not depart from the scope and of this invention will become apparent to those skilled in the art. This invention is not to be unduly limited to the illustrative embodiments set forth herein.

## Claims

1.  A method comprising the step of:

    spray-drying a solution or slurry comprising one or more of members within the class (alkali metal or ammonium) (metal) hexacyanoferrate particles wherein the metal is selected from the group consisting of Fe, Ru, Os, Rh, Ir, N, Pd, Pt, Cu, Ag, Au, Zn, Cd, and Hg in a liquid to provide monodisperse particles in a yield of at least 70 percent of theoretical yield and having an average particle size in the range of 1 to 500 $\mu$m, said sorbents being active towards Cs ions.

2.  The method according to claim I wherein said particles are selected from the group consisting of potassium nickel hexacyanoferrate, potassium zinc hexacyanoferrate (KZNHEX), potassium copper hexacyanoferrate (KCUHEX), potassium iron hexacyanoferrate (KFEHEX), and ammonium iron hexacyanoferrate (NH$_4$FEHEX), potassium cadmium hexacyanoferrate (KCDHEX).

3.  The method according to claim 1 or 2 wherein a combination of hexacyanoferrates are produced.

4.  The method according to any one of claims 1 to 3 further comprising the step of heating said substantially spherical particles at a temperature of at least 115°C.

5.  The method according to any one of claims 1 to 4 wherein said spherical particles have an average size in the range of about 1 to 60 $\mu$m.

6.  Monodisperse (alkali metal or ammonium) (metal) hexacyanoferrate particles and combinations thereof prepared according to the method of any one of claims I to 5.

7.  The particles according to claim 6 prepared by spray-drying a slurry of irregularly shaped particles to produce said substantially spherical particles.

8.  The particles according to claim 6 or 7 packed in a column for use in selective separations of Cs ions from aqueous solutions.

9.  The particles according to any one of claims 6 to 8 which are introduced into a Cs ion containing solution, equilibrated with the solution, and then separated from the solution with the Cs ions having replaced metal ions or ammonium ions in (alkali metal or ammonium) (metal) hexacyanoferrates.

10. Substantially spherical particles according to any one of claims 6 to 9 which are enmeshed in a nonwoven fibrous web or a cast membrane

11. The substantially spherical particles according to claim 10 which are enmeshed in a web of fibrillated polytetrafluoroethylene (PTFE).

12. The substantially spherical particles according to claim 10 which are enmeshed, optionally in the presence of a hydrocarbon binder, in a web selected from the group consisting of fibrous pulps, macroporous fibrous webs or microporous fibrous webs.

13. The hexacyanoferrate particles according any one of claims 6 to 12 which are a combination of hexacyanoferrates.

**EP 1 012 115 B1**

**Patentansprüche**

1. Verfahren, umfassend den Schritt:
   Sprühtrocknen einer Lösung oder Aufschlümmung, umfassend ein oder mehrere Mitglieder innerhalb der Klasse (Alkalimetall- oder Ammonium-)(Metall-) Hexacyanoferrat-Teilchen, wobei das Metall aus Fe, Ru, Os, Rh, Ir, N, Pd, Pt, Cu, Ag, Au, Zn, Cd und Hg ausgewählt ist, in einer Flüssigkeit zur Bereitstellung von monodispersen Teilchen in einer Ausbeute von mindestens 70 Prozent der theoretischen Ausbeute und mit einer mittleren Teilchengröße im Bereich von 1 bis 500 µm, wobei die Sorbentien gegenüber Cs-Ionen aktiv sind.

2. Verfahren nach Anspruch 1, wobei die Teilchen aus Kaliumnickelhexacyanoferrat, Kaliumzinkhexacyanoferrat (KZNHEX), Kaliumkupferhexacyanoferrat (KCUHEX), Kaliumeisenhexacyanoferrat (KFEHEX) und Ammoniumeisenhexacyanoferrat (NH$_4$FEHEX), Kaliumcadmiumhexacyanoferrat (KCDHEX) ausgewählt sind.

3. Verfahren nach Anspruch 1 oder 2, wobei eine Kombination von Hexacyanoferraten hergestellt wird.

4. Verfahren nach einem der Ansprüche 1 bis 3, das weiterhin den Schritt des Erhitzens der im Wesentlichen kugelförmigen Teilchen auf eine Temperatur von mindestens 115°C umfasst.

5. Verfahren nach einem der Ansprüche 1 bis 4, wobei die kugelförmigen Teilchen eine mittlere Teilchengröße im Bereich von etwa 1 bis 60 µm aufweisen.

6. Monodisperse (Alkalimetall- oder Ammonium-)(Metall-) Hexacyanoferrat-Teilchen und Kombinationen davon, hergestellt nach dem Verfahren nach einem der Ansprüche 1 bis 5.

7. Teilchen nach Anspruch 6, hergestellt durch Sprühtrocknen einer Aufschlämmung von unregelmäßig geformten Teilchen zur Herstellung der im Wesentlichen kugelförmigen Teilchen.

8. Teilchen nach Anspruch 6 oder 7, gefüllt in eine Säule zur Verwendung bei der selektiven Trennung von Cs-Ionen aus wässerigen Lösungen.

9. Teilchen nach einem der Ansprüche 6 bis 8, die in eine Cs-Ionen-enthaltende Lösung eingeführt, mit der Lösung ins Gleichgewicht gebracht, und dann von der Lösung getrennt werden, wobei die Cs-Ionen die Metallionen oder Ammoniumionen in (Alkalimetall- oder Ammonium-)(Metall-) Hexacyanoferraten verdrängt haben.

10. Im Wesentlichen kugelförmige Teilchen nach einem der Ansprüche 6 bis 9, die in einem Faservlies oder einer Gussmembran verfangen sind.

11. Im Wesentlichen kugelförmige Teilchen nach Anspruch 10, die in einem Flächengebilde aus fibrilliertem Polytetrafluorethylen (PTFE) verfangen sind.

12. Im Wesentlichen kugelförmige Teilchen nach Anspruch 10, die, gegebenenfalls in Gegenwart eines Kohlenwasserstoffbindemittels, in einem Flächengebilde, ausgewählt aus Faserzellstoffen, Flächengebilden aus makroporöser Faser oder Flächengebilden aus mikroporöser Faser, verfangen sind.

13. Hexacyanoferratteilchen nach einem der Ansprüche 6 bis 12, die eine Kombination von Hexacyanoferraten darstellen.


**Revendications**

1. Procédé comprenant l'étape:
   sécher par pulvérisation une solution ou suspension épaisse comprenant un ou plusieurs des membres figurant dans la classe des particules d'hexacyanoferrate (métal) (métal alcalin ou ammonium), dans lequel le métal est choisi dans le groupe constitué de Fe, Ru, Os, Rh, Ir, N, Pd, Pt, Cu, Ag, Au, Zn, Cd et Hg dans un liquide pour donner des particules monodispersées à un rendement d'au moins 70 pour-cent de rendement théorique et ayant une taille particulaire moyenne dans la fourchette de 1 à 500 µm, lesdits sorbants étant actifs vis-à-vis des ions Cs.

**16**

**2.** Procédé selon la revendication 1, dans lequel lesdites particules sont choisies dans le groupe constitué de l'hexacyanoferrate de nickel potassium l'hexacyanoferrate de zinc potassium (KZNHEX), l'hexacyanoferrate de cuivre potassium (KCUHEX), l'hexacyanoferrate de fer potassium (KFEHEX) et l'hexacyanoferrate de fer ammonium (NH$_4$FEHEX), l'hexacyanoferrate de cadmium potassium (KCDHEX).

**3.** Procédé selon la revendication 1 ou 2, dans lequel une combinaison d'hexacyanoferrates est produite.

**4.** Procédé selon l'une quelconque des revendications 1 à 3, comprenant en outre l'étape consistant à chauffer lesdites particules sensiblement sphériques à une température d'au moins 115° C.

**5.** Procédé selon l'une quelconque des revendications 1 à 4, dans lequel lesdites particules sphériques ont une taille moyenne dans la fourchette d'environ 1 à 60 μm.

**6.** Particules d'hexacyanoferrate de (métal) (métal alcalin ou ammonium) monodispersées et leurs combinaisons préparées en conformité avec le procédé selon l'une quelconque des revendications 1 à 5.

**7.** Particules selon la revendication 6, préparées par séchage par pulvérisation d'une suspension épaisse de particules irrégulièrement formées pour produire lesdites particules sensiblement sphériques.

**8.** Particules selon la revendication 6 ou 7 tassées dans une colonne pour utilisation dans des séparations sélectives d'ions césium à partir de solutions aqueuses.

**9.** Particules selon l'une quelconque des revendications 6 à 8 qui sont introduites dans une solution contenant des ions césium, équilibrées avec la solution, puis séparées de la solution alors que les ions Cs ont remplacé des ions métal ou des ions ammonium dans les hexacyanoferrates (métal) (métal alcalin ou ammonium).

**10.** Particules sensiblement sphériques selon l'une quelconque des revendications 6 à 9 qui sont introduites sous forme maillée dans une bande fibreuse non-tissée ou dans une membrane moulée.

**11.** Particules sensiblement sphériques selon la revendication 10 qui sont introduites sous forme maillée dans une bande de polytétrafluoroéthylène (PTFE) fibrillé.

**12.** Particules sensiblement sphériques selon la revendication 10 qui sont introduites sous forme maillée, facultativement en présence d'un liant d'hydrocarbure, dans une bande choisie dans le groupe constitué de pâtes fibreuses, bandes fibreuses macroporeuses ou de bandes fibreuses microporeuses.

**13.** Particules d'hexacyanoferrate selon l'une quelconque des revendications 6 à 12 qui sont une combinaison d'hexa-cyanoferrates.

Fig. 1

Fig. 2

EP 1 012 115 B1